# EUROPÄISCHE PATENTSCHRIFT

(11) **EP 1 651 460 B1**
(45) Veröffentlichungstag und Bekanntmachung des Hinweises auf die Patenterteilung: **03.09.2008**
(21) Anmeldenummer: 04734528.5
(22) Anmeldetag: 24.05.2004
(51) Int. Cl.: B60W 10/06, B60K 6/448, B60K 6/547, B60W 10/08, B60W 20/00

(54) **REGELSTRATEGIE FÜR ELEKTROMECHANISCH LEISTUNGSVERZWEIGENDE HYBRIDANTRIEBE**
REGULATING STRATEGY FOR ELECTROMECHANICALLY POWER-BRANCHING HYBRID DRIVES
STRATEGIE DE REGULATION POUR SYSTEME HYBRIDE DE PROPULSION A BRANCHEMENT DE COUPLE PAR VOIE ELECTROMECANIQUE

(30) Priorität: 25.07.2003 DE 10333931
(43) Veröffentlichungstag der Anmeldung: 03.05.2006
(73) Patentinhaber: ROBERT BOSCH GMBH, 70442 Stuttgart (DE)
(72) Erfinder: WEBER, Nicole, 73084 Salach (DE); FALKENSTEIN, Jens-Werner, 73434 Aalen (DE)
(86) Internationale Anmeldenummer: PCT/EP2004/050903
(87) Internationale Veröffentlichungsnummer: WO 2005/009770

(56) Entgegenhaltungen:
- EP-A- 1 270 301
- DE-A- 10 062 556
- DE-A- 19 903 936
- US-A1- 2002 024 306
- US-A1- 2002 113 440
- US-A1- 2003 060 948

## Beschreibung

Die Erfindung betrifft ein Verfahren zur Regelung eines elektromechanisch leistungsverzweigenden Hybridantriebs eines Kraftfahrzeugs mit einem Verbrennungsmotor und zwei Elektromaschinen, die durch ein nachgeschaltetes Getriebe gekoppelt sind, sowie einen elektromechanisch leistungsverzweigenden Hybridantrieb für ein Kraftfahrzeug.

### Stand der Technik

Während bekannte Handschalt- und Automatikgetriebe für Kraftfahrzeuge gestufte Übersetzungen aufweisen und es daher nicht erlauben, den Verbrennungsmotor in allen Fahrzuständen im Bereich hoher Wirkungsgrade zu betreiben, kann dieses Problem durch einen elektromechanisch leistungsverzweigenden Hybridantrieb beseitigt werden. Derartige Hybridantriebe sind zum Beispiel in der DE 198 42 452 A1 (TOYOTA-Hybridsystem), der DE 199 03 936 A1 (Dual-E-Getriebe) oder der DE 199 09 424 A1 (SEL 120/3-Getriebe) offenbart. Alle diese Antriebe besitzen neben dem Verbrennungsmotor zwei Elektromaschinen, die ein elektrisches Stellgetriebe bilden. Der Verbrennungsmotor und die Elektromaschinen sind durch ein nachgeschaltetes mechanisches Getriebe mit Planetenstufen gekoppelt, in dem die Antriebsleistung des Verbrennungsmotors in zwei Teilleistungen aufgeteilt wird. Während die eine Teilleistung mechanisch und damit mit hohem Wirkungsgrad zur Getriebeabtriebswelle und damit zu den Rädern des Kraftfahrzeugs übertragen wird, wird die andere Teilleistung von der einen Elektromaschine im Generatorbetrieb in elektrische Leistung umgewandelt und von der anderen Elektromaschine im Motorbetrieb wieder in das Getriebe eingespeist.

Bei derartigen Antrieben kann auf einen zusätzlichen Starter bzw. Generator verzichtet werden. Die Elektromaschinen starten den Verbrennungsmotor und erzeugen die erforderliche elektrische Leistung für ein Bordnetz des Kraftfahrzeugs, das einen Energiespeicher für die erzeugte elektrische Leistung umfasst. Neben einem hybridischen Betrieb, in dem sowohl der Verbrennungsmotor und die Elektromaschinen arbeiten, ist auch ein Boostbetrieb und ein rein elektrischer Fahrbetrieb möglich, bei welchem letzteren elektrische Leistung aus dem Energiespeicher entnommen wird.

Im hybridischen Betrieb entsteht durch die Entkopplung der Drehzahlen der beiden Elektromaschinen ein Drehzahl-Freiheitsgrad, was bedeutet, dass bei vorgegebener Fahrzeuggeschwindigkeit und damit vorgegebener Drehzahl an der Getriebeabtriebswelle (und bei vorgegebener Fahrstufe beim SEL- bzw. Dual-E-Getriebe) die Drehzahl von einer der beiden Elektromaschinen innerhalb der physikalischen Grenzen frei gewählt werden kann. Die Drehzahl der zweiten Elektromaschine und die Drehzahl des Verbrennungsmotors ergeben sich dann durch die Koppelbedingungen des nachgeschalteten Getriebes. Dieser Drehzahl-Freiheitsgrad wird dazu benutzt, den Antriebsstrang im Bereich hoher Gesamtwirkungsgrade zu betreiben. Eine Steuerung des Kraftfahrzeugs berücksichtigt im Wesentlichen dessen Geschwindigkeit bzw. die Ist-Drehzahl der Getriebeabtriebswelle sowie die vom Fahrer angeforderte mechanische Leistung (Fahrpedalstellung) und die zur Versorgung des Bordnetzes erforderliche elektrische Leistung und legt auf der Grundlage dieser Parameter den vorhandenen Drehzahl-Freiheitsgrad sowie die Drehmomente der drei Antriebsaggregate fest.

Bei den bekannten Verfahren zur Regelung eines solchen Antriebs mit einem Drehzahl-Freiheitsgrad wird eine der Elektromaschinen drehzahlgeregelt betrieben, während der Verbrennungsmotor und die andere Elektromaschine drehmomentgesteuert bzw. die letztere im Falle einer Elektromaschine mit Stromregler oder feldorientierter Regelung drehmomentgeregelt wird. Das heißt, eine Steuerung des Kraftfahrzeugantriebs gibt die Soll-Drehzahl der drehzahlgeregelten Elektromaschine, das Soll-Drehmoment der drehmomentgesteuerten Elektromaschine und das Soll-Drehmoment des drehmomentgesteuerten Verbrennungsmotors vor. Die beiden drehmomentgesteuerten Antriebsaggregate beeinflussen nicht nur das Drehmoment an der Getriebeabtriebswelle sondern auch das Drehmoment, das am drehzahlgeregelten Antriebsaggregat entsteht bzw. dort von einem Drehzahlregler dieses Aggregats eingestellt und als Sollwert für dessen unterlagerte Stromregelung vorgegeben wird. Im Idealfall entspricht dieses Drehmoment einem in der Steuerung vorausberechneten Soll-Drehmoment für die drehzahlgeregelte Elektromaschine.

Allerdings wirken sich bei dem bekannten Verfahren insbesondere beim Verbrennungsmotor vorhandene Ungenauigkeiten in den Drehmomentsteuerungen sowie Ungenauigkeiten in den Reibverhältnissen des Getriebes auf die drehzahlgeregelte Elektromaschine aus, wodurch das vom Drehzahlregler an dieser Elektromaschine eingestellte Drehmoment erheblich von dem in der Steuerung vorausberechneten Soll-Drehmoment abweichen kann.

Daraus ergeben sich einige negative Auswirkungen. Zum einen weicht in diesem Fall auch die elektrische Leistung der drehzahlgeregelten Elektromaschine vom Sollwert ab. Die in das Bordnetz eingespeiste elektrische Leistung entspricht dann nicht der Vorgabe der Steuerung, was sich negativ auf das elektrische Bordnetz auswirkt. Daneben können auch die Leistungsgrenzen des elektrischen Energiespeichers verletzt werden, z.B. bei der Energierückgewinnung während eines Bremsvorgangs oder beim Boostbetrieb. Zum anderen kann die drehzahlgeregelte Elektromaschine durch Ungenauigkeiten an ihre maximale Drehmomentgrenze gelangen, was gleichbedeutend mit einer Stellgrößenbegrenzung für den Drehzahlregelkreis ist. Die mit der Drehzahlregelung eingebrachte Bindung wird dabei unwirksam. Ohne weitere Eingriffe an der drehmomentgesteuerten zweiten Elektromaschine bzw. an dem drehmomentgesteuerten Verbrennungsmotor geht die Kontrolle über das System verloren.

Im dynamischen Betrieb können die drehmomentgesteuerten Antriebsaggregate basierend auf der Kenntnis der zu kompensierenden Trägheiten vorgesteuert werden. Allerdings ist dabei mit zusätzlichen Ungenauigkeiten zu rechnen, die sich wiederum auf das Drehmoment der drehzahlgeregelten Elektromaschine auswirken.

Aus der US 2002/113440 A1 ist bekannt, bei einem Hybridfahrzeug mit einem Verbrennungsmotor und zwei elektrischen Maschinen, die durch ein Getriebe gekoppelt sind, die Ist-Drehzahl des Verbrennungsmotors zu messen und mit Soll-Drehzahlen zu verglichen und die Vergleichsergebnisse zu verschiedenen Steuerungs- bzw. Regelungszwecken zu verwenden. Weiterhin wird die Ist und die Solldrehzahl einer der beiden elektrischen Maschinen ermittelt und die beiden Größen werden miteinander verglichen. Dabei findet auch eine Momentenregleung für die eine elektrische Maschine statt. Ob bzw. wie die zweite elektrische Maschine geregelt wird, wird nicht erwähnt.

### Vorteile der Erfindung

Der erfindungsgemäße elektromechanisch leistungsverzweigende Hybridantrieb und das Verfahren zu seiner Regelung mit den Merkmalen der Ansprüche 1 bzw. 8 weist demgegenüber den Vorteil auf, dass die Aufgabe der Drehzahlregelung auf alle Aggregate, d.h. auf den Verbrennungsmotor, die erste Elektromaschine und die zweite Elektromaschine verteilt wird, um die oben beschriebenen Nachteile zu vermeiden. Mit den erfindungsgemäßen Maßnahmen werden Ungenauigkeiten in den Reibverhältnissen des Getriebes und Ungenauigkeiten in der Drehmomentsteuerung des Verbrennungsmotors berücksichtigt und deren Auswirkungen auf die in das Bordnetz eingespeiste elektrische Leistung minimiert.

Daneben besteht eine weitaus geringere Gefahr, infolge von Stellgrößenbegrenzungen die Kontrolle über das System zu verlieren. Weitere Vorteile bestehen in einer aktiven Dämpfung von unerwünschten Drehschwingungen eines Antriebsstrangs des Antriebs. Zudem lässt sich das erfindungsgemäße Verfahren vorteilhaft mit einer üblichen Steuergerätestruktur ausführen, bei der jedem der drei Antriebsaggregate ein Steuergerät zugeordnet ist, z.B. ein Motorsteuergerät für den Verbrennungsmotor und jeweils ein Wechselrichter mit Controller für die beiden Elektromaschinen, und bei der die Steuergeräte über eine Busverbindung miteinander kommunizieren.

Da bei modernen Elektromaschinen das vorgegebene Soll-Drehmoment ausreichend genau umgesetzt wird, während beim Verbrennungsmotor zwischen dem Soll-Drehmoment und dem an der Kurbelwelle erzeugten Ist-Drehmoment zumeist größere Abweichungen auftreten, ist in bevorzugter Ausgestaltung der Erfindung vorgesehen, dass als Drehzahlregler für den Verbrennungsmotor ein I-, PI- oder PID-Regler verwendet wird, während als Drehzahlregler für die Elektromaschinen P- oder PD-Regler verwendet werden.

Gemäß einer vorteilhaften Ausgestaltung der Erfindung bilden die Drehzahlregler jeweils einen Teil eines dezentralen Drehzahlregelkreises des Verbrennungsmotors bzw. der Elektromaschinen, die in den Steuergeräten der einzelnen Aggregate realisiert sind und nicht über ein Bussystem geschlossen sind, so dass längere Signallaufzeiten vermieden und dadurch hohe Bandbreiten erzielt werden können. Für die Vorgabe der Soll-Drehmomente und der Soll-Drehzahlen von der Steuerung an die Steuergeräte wird hingegen vorteilhaft ein Bussystem genutzt, das in modernen Kraftfahrzeugen üblicherweise vorhanden ist.

Die Reglerparameter der Drehzahlregelkreise bzw. die Initialisierung eines Integral-Anteils des Drehzahlregelkreises des Verbrennungsmotors werden vorzugsweise ebenfalls von der Steuerung vorgegeben, wodurch sich das Regelverhalten und die aktive Drehschwingungsdämpfung an den jeweiligen Betriebszustand des Antriebsstrangs anpassen lassen. Damit lassen sich zum Beispiel Start- und Stopp-Vorgänge des Verbrennungsmotors, bei denen eine von seinem Zweimassenschwungrad geprägte Resonanzfrequenz durchlaufen wird, ohne die Notwendigkeit einer Veränderung der Reglerstruktur getrennt betrachten und optimieren.

In den meisten Betriebszuständen des Hybridantriebs arbeitet eine der beiden Elektromaschinen als Motor, während die andere als Generator arbeitet. Durch geeignete, an den Betriebszustand angepasste Vorgaben der Reglerparameter lassen sich die Auswirkungen von Reglereingriffen auf die in das Bordnetz eingespeiste elektrische Leistung minimieren.

Bei vorgegebener Fahrzeuggeschwindigkeit und damit festliegender Ist-Drehzahl an der Getriebeabtriebswelle ist ein Drehzahlfreiheitsgrad im Getriebe vorhanden. Wenn eine Gefahr besteht, das System mit drei Drehzahlregelkreisen z.B. infolge von Ungenauigkeiten oder Zeitverzögerungen in den Drehzahlerfassungen zu verspannen, können an einem bzw. an zwei Drehzahlregelkreisen Bandpassfilter (nicht dargestellt) vor oder hinter dem Drehzahlregler vorgesehen werden, die den Reglereingriff auf den Frequenzbereich der unerwünschten Antriebsstrangdrehschwingungen begrenzen. Bei drohenden Stellgrößenbegrenzungen oder größeren Regelabweichungen sollte die Steuerung die Wirkung der Bandpassfilter zurücknehmen, um alle Aggregate für die Erhaltung der Drehzahlbindung zu nutzen.

### Zeichnung

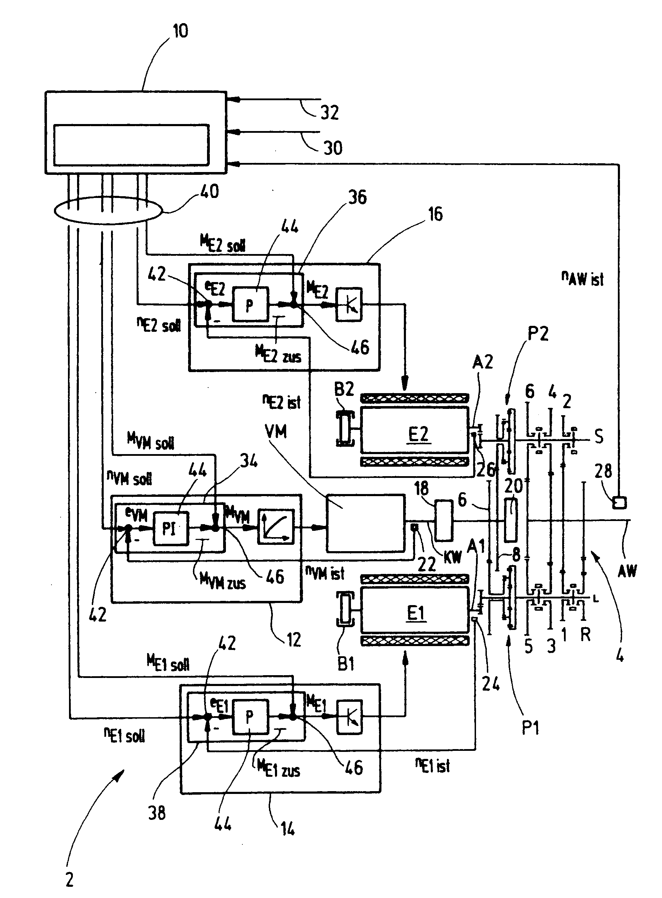

Die Erfindung wird nachfolgend in einem Ausführungsbeispiel anhand der zugehörigen Zeichnung näher erläutert. Die einzige Figur zeigt eine schematische Darstellung eines Hybridantriebs für ein Kraftfahrzeug mit zugehöriger Regelstrategie.

### Beschreibung des Ausführungsbeispiels

Der in der Zeichnung dargestellte, als sogenanntes Dual-E-Getriebe ausgebildete elektromechanisch leistungsverzweigende Hybridantrieb 2 eines Kraftfahrzeugs besteht im Wesentlichen aus drei Antriebsaggregaten in Form eines Verbrennungsmotors VM und zweier Elektromaschinen E1 und E2, zwei den Elektromaschinen E1 und E2 nachgeschalteten Planetenstufen P1 und P2, die über ein mehrstufiges mechanisches Dreiwellen-Schaltgetriebe 4 mit einer zu den Rädern des Kraftfahrzeugs führenden Getriebeabtriebswelle AW und über zwei Zahnräder 6 und 8 mit einer Kurbelwelle KW des Verbrennungsmotors VM gekoppelt sind, einer gemeinsamen Steuerung 10 für alle drei Antriebsaggregate VM, E1, E2, sowie getrennten Steuergeräten für den Verbrennungsmotor VM und die beiden Elektromaschinen E1, E2 in Form einer Motorsteuerung 12 bzw. zweier Wechselrichter 14 und 16.

Die Kurbelwelle KW des Verbrennungsmotors VM ist über ein Zweimassenschwungrad 18 mit den beiden Zahnrädern 6 und 8 verbunden. Ein Freilauf 20 stützt die Drehmomente der Elektromaschinen E1 und E2 beim elektrischen Fahren, d.h. bei abgeschaltetem Verbrennungsmotor VM ab und verhindert eine Rückwärtsdrehung des Verbrennungsmotors VM. In der Nähe der Kurbelwelle KW ist ein Drehzahlsensor 22 angeordnet, der die Ist-Drehzahl n_{VM} ist der Kurbelwelle KW misst und als Eingangsgröße in das Motorsteuergerät 12 zuführt.

Die Antriebswellen A1 und A2 der beiden Elektromaschinen E1 und E2 sind jeweils mit einer Bremse B1 bzw. B2 zur mechanischen Abbremsung der Antriebswelle A1 bzw. A2 versehen. In der Nähe der Antriebswellen A1 und A2 ist jeweils ein Drehzahlsensor 24 bzw. 26 angeordnet, der die Ist-Drehzahl n_{E1} ist und n_{E2} ist der Antriebswellen A1 bzw. A2 misst und als Eingangsgröße zum entsprechenden Wechselrichter 14 bzw. 16 zuführt.

Ein weiterer, in der Nähe der Getriebeabtriebswelle AW angeordneter Drehzahlsensor 28 ermittelt deren Ist-Drehzahl n_{AW} ist und leitet sie an die nicht näher beschriebene Steuerung 10 weiter, die als weitere Eingangsgrößen neben der Ist-Drehzahl n_{AW} ist der Getriebeabtriebswelle AW oder alternativ der Drehzahl der Räder bei 30 die Stellung des Fahrpedals als Anzeige für die angeforderte Antriebsleistung und bei 32 die von einem Bordnetz des Kraftfahrzeugs angeforderte elektrische Leistung erhält.

Aus diesen Eingangsgrößen berechnet die Steuerung 10 basierend auf den Koppelbedingungen des Getriebes 4 die Solldrehzahlen n_{VM} soll, n_{E1 soll}, n_{E2 soll} und die Solldrehmomente M_{VM soll}, M_{E1 soll}, M_{E2 soll} des Verbrennungsmotors VM sowie der Elektromaschinen E1 und E2. Die Solldrehmomente M_{VM soll}, M_{E1 soll}, M_{E2 soll} können Anteile zur Kompensation der Trägheiten bei dynamischem Betrieb enthalten. Wie nachfolgend beschrieben, werden die Solldrehmomente M_{VM soll}, M_{E1 soll}, M_{E2 soll} von drei unterlagerten dezentralen Drehzahlregelkreisen im Motorsteuergerät 12 und in den beiden Wechselrichtern 14, 16 als Vorsteuerung benutzt und liegen im Sinne einer kaskadierten Stellgrößenbeschränkung innerhalb der Grenzen des maximalen Drehmoments des jeweiligen Aggregates VM, E1, E2, um für Drehzahlregler 34, 36, 38 der Drehzahlregelkreise Stellreserven bereitzustellen.

Für die Vorgabe der Soll-Drehmomente und der Soll-Drehzahlen von der Steuerung 10 an das Motorsteuergerät 12 und die beiden Wechselrichter 14, 16 wird ein im Kraftfahrzeug vorhandenes Bussystem 40 genutzt. Demgegenüber sind die Drehzahlregler 34, 36, 38 selbst nicht über ein Bussystem geschlossen, so dass längere Signallaufzeiten vermieden und hohe Bandbreiten erzielt werden können.

Die Drehzahlregler 34, 36 bzw. 38 im Motorsteuergerät 12 und in den beiden Wechselrichtern 14, 16 umfassen jeweils ein Vergleichsglied 42, das als Eingangsgröße vom zugehörigen Drehzahlsensor 22, 24 bzw. 26 die jeweilige Ist-Drehzahl n_{VM} ist, n_{E1} ist, n_{E2} ist der Kurbelwelle KW bzw. von einer der Antriebswellen A1, A2 und von der Steuerung 10 die jeweilige Solldrehzahl n_{VM soll}, n_{E1 soll} bzw. n_{E2 soll} erhält, das Soll- und Ist-Wertepaar vergleicht und eine eventuelle Regelabweichung e_{E1}, e_{E2} bzw. e_{VM} ermittelt.

Neben dem Vergleichsglied 42 umfassen die Drehzahlregler 34, 36, 38 ein Übertragungsglied 44, das die gegebenenfalls auftretenden Regelabweichungen e_{VM}, e_{E1} bzw. e_{E2} vom Vergleichsglied 42 erhält, auf der Basis dieser Regelabweichungen ein zusätzliches Drehmoment M_{VM zus}, M_{E1 zus} bzw. M_{E2 zus} berechnet und als Ausgangssignal einem von der Steuerung 10 mit dem entsprechenden Soll-Drehmoment M_{E1 soll}, M_{E2 soll} bzw. M_{VM} soll beau f-schlagten Stellglied 46 zuführt. Nach einer Addition der beiden Signale im Stellglied 46 wird von diesem das Summendrehmoment M_{E1}, M_{E2}, M_{VM} an der jeweiligen Elektromaschine E1, E2 bzw. am Verbrennungsmotor VM eingestellt. Während beim Auftreten einer Regelabweichung e_{VM}, e_{E1} bzw. e_{E2} an einem der Aggregate VM, E1 bzw. E2 ein auf der Basis dieser Regelabweichung e_{VM}, e_{E1} bzw. e_{E2} berechnetes zusätzliches Drehmoment M_{VM zus}, M_{E1 zus} bzw. M_{E2} zus in der Regel bei der Drehmomentsteuerung desjenigen Aggregats VM, E1 bzw. E2 berücksichtigt werden wird, an dem zuvor die Regelabweichung e_{VM}, e_{E1} bzw. e_{E2} aufgetreten war, ist es jedoch auch möglich, in einer Art "Zustandsregelung" auf der Basis der Regelabweichung e_{VM}, e_{E1} bzw. e_{E2} eines Aggregats VM, E1 bzw. E2 auch für die jeweils anderen Aggregate E1, E2 bzw. VM zusätzliche Drehmomente M_{E1 zus}, M_{E2 zus} bzw. M_{VM zus} zu berechnen, die dann neben den von der Steuerung 10 berechneten Soll-Drehmomenten M_{E1 soll}, M_{E2 soll} bzw. M_{VM soll} bei der Drehmomentsteuerung dieser Aggregate E1, E2 bzw. VM berücksichtigt werden.

Die Drehzahlregler 36, 38 der Elektromaschinen E1 und E2 sind als P-Regler oder PD-Regler ausgeführt, während der Drehzahlregler 34 des Verbrennungsmotors VM als I-, Pl- oder PID-Regler ausgeführt ist. Durch diese letztere Maßnahme wird der Drehzahlregelkreis des Verbrennungsmotors VM mit einem Integral-Anteil versehen, der Ungenauigkeiten in der Drehmomentsteuerung des Verbrennungsmotors VM ausgleicht, so dass sich im stationären Betrieb die Ist-Drehzahl n_{VM} ist des Verbrennungsmotors VM asymptotisch an die Solldrehzahl n_{VM} soll annähern wird. Damit gehen auch die Regelabweichungen e_{E1} und e_{E2} an den Elektromaschinen E1 und E2 gegen Null. Die Elektromaschinen E1 und E2 stellen dann näherungsweise die Soll-Drehmomente ein (M_{E1} = M_{E1 soll}, M_{E2} = M_{E2 soll}). Mit den von der Steuerung 10 vorgegebenen Soll-Drehmomenten M_{E1 soll} und M_{E2 soll} wird dann selbst im Fall von Ungenauigkeiten in den Reibverhältnissen des Getriebes 4 auch die Vorgabe für die in das Bordnetz eingespeiste elektrische Leistung eingehalten.

Da alle drei Aggregate VM, E1 und E2 drehzahlgeregelt betrieben werden, können zwei davon in die Stellgrößenbegrenzung geraten, ohne dass die Kontrolle über das System verloren geht. Sollten zum Beispiel beide Elektromaschinen E1 und E2 infolge einer Über- oder Unterspannungsabregelung in die Stellgrößenbegrenzung geraten, so hält der Verbrennungsmotor VM weiterhin die Drehzahlbindung aufrecht.

Die P-Anteile der Drehzahlregler 34, 36, 38 entsprechen in ihrer Wirkung drehzahlproportionalen mechanischen Dämpfern und wirken damit Drehschwingungen der Aggregate VM, E1 und E2 entgegen, die zum Beispiel infolge von Torsionsschwingungen des Zweimassenschwungrades 18 entstehen können. Mit den drei unterlagerten Drehzahlregelkreisen tragen alle drei Aggregate VM, E1 und E2 zur aktiven Drehschwingungsdämpfung bei. Während in das Drehmoment M_{VM} des Verbrennungsmotors VM nur zu den diskreten Zündzeitpunkten eingegriffen werden kann, was die Drehschwingungsdämpfung mittels des Verbrennungsmotors VM auf niedrige Frequenzen beschränkt, lassen sich bei Elektromaschinen in Form von Drehstrommaschinen mit feldorientierter Regelung Drehmomentregelzeiten < 1 ms erzielen, so dass in Verbindung mit geeigneten Drehzahlsensoren die Dämpfung höherer Frequenzen möglich ist.

## Patentansprüche

1. Elektromechanisch leistungsverzweigender Hybridantrieb für ein Kraftfahrzeug, mit einem Verbrennungsmotor und zwei Elektromaschinen, die durch ein Getriebe gekoppelt sind, sowie mit einer Steuerung (10), die basierend auf Koppelbedingungen des Getriebes (P1, P2, 4) für den Verbrennungsmotor (VM) und beide Elektromaschinen (E1, E2) jeweils Soll-Drehzahlen (n_{VM soll}, n_{E1 soll}, n_{E2 soll}) und für eine der Elektromaschinen (E1) ein Soll-Drehmoment (M_{E1 soll}) berechnet, sowie mit einem Drehzahlregler (36) für die eine der Elektromaschinen (E1), welcher die berechnete Soll-Drehzahl (n_{E1 soll}) mit der zugehörigen Ist-Drehzahl (n_{E1 ist}) vergleicht und bei einer Regelabweichung (e_{E1}) zwischen der Ist-Drehzahl (n_{E1 ist}) und der zugehörigen Soll-Drehzahl (n_{E1 soll}) auf der Grundlage der Regelabweichung (e_{E1}) ein zusätzliches Drehmoment (M_{E1 zus}) berechnet, das neben dem von der Steuerung (10) berechneten Soll-Drehmoment (M_{E1 soll}) bei der Drehmomentsteuerung der einen Elektromaschine (E1) berücksichtigt wird, **gekennzeichnet durch** einen weiteren Drehzahlregler (38, 36) für die zweite Elektromaschine (E2) und den Verbrennungsmotor (VM), welche die berechneten Soll-Drehzahlen (n_{E2 soll}, n_{VM soll}) der zweiten Elektromaschine (E2) und des Verbrennungsmotors (VM) mit den zugehörigen Ist-Drehzahlen (n_{E2 ist}, n_{VM ist}) vergleichen und bei einer Regelabweichung (e_{E2}, e_{VM}) zwischen einer der Ist-Drehzahlen (n_{E2 ist}, n_{VM ist}) und der zugehörigen Soll-Drehzahl (n_{E2 soll}, n_{VM} soll) auf der Grundlage der Regelabweichung (e_{E2}, e_{VM)} ein oder mehrere zusätzliche Drehmomente (M_{E2 zus}, M_{VM zus}) berechnen, die neben von der Steuerung (10) berechneten Soll-Drehmomenten (M_{E2 soll}, M_{VM soll}) bei der Drehmomentsteuerung der zweiten Elektromaschine (E2) und des Verbrennungsmotors (VM) berücksichtigt werden.

2. Hybridantrieb nach Anspruch 1, **dadurch gekennzeichnet, dass** der Drehzahlregler (34) des Verbrennungsmotors (VM) ein I-, Pl- oder PID-Regler ist, und dass die Drehzahlregler (36, 38) der Elektromaschinen (E1, E2) P- oder PD-Regler sind.

3. Hybridantrieb nach einem der vorangehenden Ansprüche **dadurch gekennzeichnet, dass** die Drehzahlregler (34, 36, 38) jeweils Teil eines dezentralen Drehzahlregelkreises des Verbrennungsmotors (VM) bzw. der Elektromaschinen (E1, E2) sind.

4. Hybridantrieb nach einem der vorangehenden Ansprüche, **dadurch gekennzeichnet, dass** die Drehzahlregler (34, 36, 38) untereinander nicht kommunizieren.

5. Hybridantrieb nach einem der vorangehenden Ansprüche, **dadurch gekennzeichnet, dass** die Drehzahlregler (34, 36, 38) über ein Bussystem (40) mit der Steuerung (10) kommunizieren.

6. Hybridantrieb nach einem der vorangehenden Ansprüche, **dadurch gekennzeichnet, dass** die Steuerung (10) Reglerparameter der Drehzahlregelkreise und/oder eine Initialisierung eines Integral-Anteils des Drehzahlregelkreises des Verbrennungsmotors (VM) vorgibt.

7. Hybridantrieb nach einem der vorangehenden Ansprüche, **gekennzeichnet durch** einen Bandpassfilter, der vor oder hinter mindestens einem der Drehzahlregler (34, 36, 38) angeordnet ist.

8. Verfahren zur Regelung eines elektromechanisch leistungsverzweigenden Hybridantriebs eines Kraftfahrzeugs mit einem Verbrennungsmotor und zwei Elektromaschinen, die durch ein Getriebe gekoppelt sind, wobei basierend auf Koppelbedingungen des Getriebes (P1, P2, 4) für den Verbrennungsmotor (VM) und die beiden Elektromaschinen (E₁, E2) jeweils Soll-Drehzahlen (n_{VM soll}, n_{E1 soll}, n_{E2 soll}) und für eine der Elektromaschinen (E1) ein Soll-Drehmoment (M_{E1 soll}) berechnet werden, wobei die Soll-Drehzahl (n_{E1 soll}) der einen Elektromaschine (E1) mit der Ist-Drehzahl (n_{E1} ist) dieser Elektromaschine (E1) verglichen wird, und wobei bei einer Regelabweichung (e_{E1}) zwischen der Ist-Drehzahl (n_{E1 ist}) und der Soll-Drehzahl (n_{E1 soll}) auf der Grundlage der Regelabweichung (e_{E1}) ein zusätzliches Drehmoment (M_{E1 zus}) berechnet wird, das neben dem von einer Steuerung (10) berechneten Soll-Drehmoment (M_{E1 soll}) bei der Drehmomentsteuerung der Elektromaschine (E1) berücksichtigt wird, **dadurch gekennzeichnet, dass** die jeweiligen Soll-Drehzahlen (n_{E2 soll}, n_{VM soll}) der zweiten Elektromaschine (E2) und des Verbrennungsmotors (VM) mit entsprechenden Ist-Drehzahlen (n_{E2} ist, n_{VM ist}) verglichen werden, und dass bei einer Regelabweichung (e_{E2}, e_{VM}) zwischen einer der Ist-Drehzahlen (n_{E2 ist}, n_{VM} ist) und der zugehörigen Soll-Drehzahl (n_{E2 soll}, n_{VM soll}) auf der Grundlage der Regelabweichung (e_{E2}, e_{VM}) ein oder mehrere zusätzliche Drehmomente (M_{E2 zus}, M_{VM zus}) berechnet werden, die neben von der Steuerung (10) berechneten Soll-Drehmomenten (M_{E2 soll}, M_{VM soll}) bei der Drehmomentsteuerung der zweiten Elektromaschine (E2) und des Verbrennungsmotors (VM) berücksichtigt werden.

9. Verfahren nach Anspruch 8, **dadurch gekennzeichnet, dass** die Soll-Drehzahlen (n_{VM soll}, n_{E1 soll}, n_{E2 soll}) auf der Grundlage einer Fahrpedalstellung, einer für ein Bordnetz des Kraftfahrzeugs erforderlichen elektrischen Leistung und Ist-Drehzahlen von Rädern des Kraftfahrzeugs oder einer Ist-Drehzahl (n_{AW ist}) einer Abtriebswelle (AW) des Getriebes (P1, P2, 4) berechnet werden.

10. Verfahren nach Anspruch 8 oder 9, **dadurch gekennzeichnet, dass** die Soll-Drehmomente (M_{VM soll}, M_{E1 soll}, M_{E2 soll}) Anteile zur Kompensation von Trägheiten bei dynamischem Betrieb enthalten.

## Claims

1. Electromechanically power-branching hybrid drive for a motor vehicle, having an internal combustion engine and two electric machines which are coupled by means of a gear mechanism, and having a controller (10) which, on the basis of clutch engagement conditions of the gear mechanism (P1, P2, 4) calculates set point rotational speeds (n_{VM setp}, n_{E1 setp}, n_{E2 setp}) respectively for the internal combustion engine (VM) and the two electric machines (E1, E2), and a set point torque (M_{E1 setp}) for one of the electric machines (E1), and having a rotational speed controller (36) for one of the electric machines (E1), which rotational speed controller (36) compares the calculated set point rotational speed (n_{E1 setp}) with the associated actual rotational speed (n_{E1 act}), and when there is a control error (e_{E1}) between the actual rotational speed (n_{E1 act}) and the associated set point rotational speed (n_{E1 setp}) calculates, on the basis of the control error (e_{E1}) , an additional torque (M_{E1 add}) which, in addition to the set point torque (M_{E1 setp}) calculated by the controller (10), is taken into account in the torque control of the one electric machine (E1), **characterized by** a further rotational speed controller (38, 36) for the second electric machine (E2) and the internal combustion engine (VM) which compare the calculated set point rotational speeds (n_{E2 setup,} n_{VM setp}) of the second electric machine (E2) and of the internal combustion engine (VM) with the associated actual rotational speeds (n_{E2 act}, n_{VM act}), and when there is a control error (e_{E2}, e_{VM}) between one of the actual rotational speeds (n_{E2 act}, n_{VM act}) and the associated set point rotational speed (n_{E2 setp}, n_{VM setp}) calculate, on the basis of the control error (e_{E2}, e_{VM}) , one or more additional torques (M_{E2} add, M_{VM} add) which, in addition to the set point torques (M_{E2 setp}, M_{VM setp}) calculated by the controller (10), are taken into account in the torque control of the second electric machine (E2) and of the internal combustion engine (VM).

2. Hybrid drive according to Claim 1, **characterized in that** the rotational speed controller (34) of the internal combustion engine (VM) is an I, PI or PID controller, and **in that** the rotational speed controllers (36, 38) of the electric machines (E1, E2) are P controllers or PD controllers.

3. Hybrid drive according to one of the preceding claims, **characterized in that** the rotational speed controllers (34, 36, 38) are each part of a decentralized rotational speed control circuit of the internal combustion engine (VM) or of the electric machines (E1, E2).

4. Hybrid drive according to one of the preceding claims, **characterized in that** the rotational speed controllers (34, 36, 38) do not communicate with one another.

5. Hybrid drive according to one of the preceding claims, **characterized in that** the rotational speed controllers (34, 36, 38) communicate with the controller (10) via a bus system (40).

6. Hybrid drive according to one of the preceding claims, **characterized in that** the controller (10) predefines controller parameters of the rotational speed control circuits and/or predefines initialization of an integral component of the rotational speed control circuit of the internal combustion engine (VM).

7. Hybrid drive according to one of the preceding claims, **characterized by** a band pass filter which is arranged upstream of or downstream of at least one of the rotational speed controllers (34, 36, 38).

8. Method for controlling an electromechanically power-branching hybrid drive of a motor vehicle, having an internal combustion engine and two electric machines which are coupled by means of a gear mechanism, wherein, on the basis of clutch engagement conditions of the gear mechanism (P1, P2, 4), set point rotational speeds (n_{VM setp}, n_{E1 setp}, n_{E2 setp}) are respectively calculated for the internal combustion engine (VM) and the two electro machines (E1, E2), and a set point torque (M_{E1 setp}) is calculated for one of the electro machines (E1), wherein the set point rotational speed (n_{E1 setp}) of the one electric machine (E1) is compared with the actual rotational speed (n_{E1 act}) of this electric machine (E1), and wherein, when there is a control error (e_{E1}) between the actual rotational speed (n_{E1 act}) and the set point rotational speed (n_{E1 setp}) , an additional torque (n_{E1 add}) is calculated on the basis of the control error (e_{E1}) , which additional torque (M_{E1 add}) is taken into account, in addition to the set point torque (M_{E1 setp}) which is calculated by a controller (10), in the torque control of the electric machine (E1), **characterized in that** the respective set point rotational speeds (n_{E2 setp}, n_{VM setp}) of the second electric machine (E2) and of the internal combustion engine (VM) are compared with the corresponding actual rotational speeds (n_{E2 act}, n_{VM act}), and **in that**, when there is a control error (e_{E2}, e_{VM}) between one of the actual rotational speeds (n_{E2 act}, n_{VM act}) and the associated set point rotational speed (n_{E2 setp}, n_{VM setp}) , one or more additional torques (M_{E2} add, M_{VM add}) are calculated on the basis of the control error (e_{E2}, e_{VM}) and are taken into account, in addition to the set point torques (M_{E2 setp}, M_{VM setp}) calculated by the controller (10) in the torque control of the second electric machine (E2) and of the internal combustion engine (VM).

9. Method according to Claim 8, **characterized in that** the set point rotational speeds (n_{VM setp}, n_{E1 setp}, n_{E2 setp}) are calculated on the basis of a position of the accelerator pedal, of an electric power value which is necessary for an on-board power system of the motor vehicle, and actual rotational speeds of wheels of the motor vehicle or an actual rotational speed (n_{AW act}) of an output shaft (AW) of the gear mechanism (P1, P2, 4).

10. Method according to Claim 8 or 9, **characterized in that** the set point torques (M_{VM setp}, M_{E1 setp}, M_{E2 setp}) contain components for compensating inertia in the dynamic operation.

## Revendications

1. Entraînement hybride de véhicule à dérivation électromécanique de puissance comportant un moteur à combustion interne et deux moteurs électriques couplés par une transmission ainsi qu'une commande (10) qui, en fonction des conditions de couplage de la transmission (P1, P2, 4), pour le moteur à combustion (VM) et les deux machines électriques (E1, E2), calcule des vitesses de consigne (n_{VM soll}, n_{E1 soll}, n_{E2 soll}) et pour l'une des machines électriques (E1), un couple de consigne (M_{E1 soll}), et compare à l'aide d'un régulateur de vitesse de rotation (36), pour l'une des machines électriques (E1), celles des vitesses de rotation de consigne calculées (n_{E1 soll}) avec la vitesse de rotation réelle correspondante (n_{E1 ist}) et en cas d'écart de régulation (e_{E1}) entre la vitesse de rotation réelle (n_{E1 ist}) et la vitesse de rotation de consigne correspondante (n_{E1 soll}), sur le fondement de l'écart de régulation (e_{E1}), calcule un couple supplémentaire (M_{E1 zus)}, qui est pris en compte en plus du couple de consigne (M_{E1 soll}), calculé par la commande (10) pour la commande de couple de l'une des machines électriques (E1),
**caractérisé par**
un autre régulateur de vitesse de rotation (38, 36) pour la seconde machine électrique (E2) et le moteur à combustion interne (VM), qui compare les vitesses de rotation de consigne calculées (n_{E2 soll}, nv_{M soll}), la seconde machine électrique (E2) et du moteur à combustion interne (VM) aux vitesses de rotation réelles correspondantes (n_{E2 ist}, n_{VM ist}), et en cas d'écart de régulation (e_{E2}, e_{VM}) entre l'une des vitesses de rotation réelles (n_{E2 ist}, n_{vM ist}) et la vitesse de rotation de consigne correspondante (n_{E2 soll}, n_{VM soll}), sur le fondement de l'écart de régulation (e_{E2}, e_{VM}), calcule un ou plusieurs couples supplémentaires (M_{E2 zus}, M_{VM zus}), qui sont pris en compte en plus des couples de consigne calculés (M_{E2} son, M_{VM soll}) par la commande de couple de la seconde machine électrique (E2) et du moteur à combustion interne (VM).

2. Entraînement hybride selon la revendication 1,
**caractérisé en ce que**
le régulateur de vitesse de rotation (34) du moteur à combustion interne (VM) est un régulateur I-, PI- ou un régulateur PID et le régulateur de vitesse de rotation (36, 38) des machines électriques (E1, E2) sont des régulateurs P- ou -PD.

3. Entraînement hybride selon l'une des revendications précédentes,
**caractérisé en ce que**
les régulateurs de vitesse de rotation (34, 36, 38) sont chaque fois une partie d'un circuit de régulation décentralisé de vitesse de rotation du moteur à combustion interne (VM) ou des machines électriques (E1, E2).

4. Entraînement hybride selon l'une des revendications précédentes,
**caractérisé en ce que**
les régulateurs de vitesse de rotation (34, 36, 38) ne communiquent pas entre eux.

5. Entraînement hybride selon l'une des revendications précédentes,
**caractérisé en ce que**
les régulateurs de vitesse de rotation (34, 36, 38) communiquent avec la commande (10) par un système de bus (40).

6. Entraînement hybride selon l'une des revendications précédentes,
**caractérisé en ce que**
la commande (10) prédéfinit des paramètres de régulation pour les circuits de régulation de vitesse de rotation et/ou une initialisation d'une composante intégrale du circuit de régulation de vitesse de rotation du moteur à combustion interne (VM).

7. Entraînement hybride selon l'une des revendications précédentes,
**caractérisé par**
un filtre passe-bande installé en amont ou en aval d'au moins l'un des régulateurs de vitesse de rotation (34, 36, 38).

8. Procédé de régulation d'un entraînement hybride à dérivation de puissance électromécanique d'un véhicule automobile comportant un moteur à combustion interne et deux machines électriques couplés par une transmission, selon lequel
en fonction des conditions de couplage de la transmission (P1, P2, 4) du moteur à combustion interne (VM) et des machines électriques (E1, E2), on calcule respectivement des vitesses de rotation de consigne (n_{VM soll}, n_{E1 soll}, n_{E2 soll}) et pour l'une des machines électriques (E1) p, calcule un couple de consigne (M_{E1 soll}),
on compare la vitesse de rotation de consigne (M_{E1 soll}) d'une machine électrique (E1) à la vitesse de rotation réelle (n_{E1 ist}) de cette machine électrique (E1) et
en cas d'écart de régulation (e_{E1}) entre la vitesse de rotation réelle (n_{E1} ist) et la vitesse de rotation de consigne (n_{E1 soll}), sur le fondement de l'écart de régulation (e_{E1}), on calcule un couple supplémentaire (M_{E1 zus}) qui est pris en compte en plus du couple de consigne (M_{E1 soll}) calculé par la commande (10) pour la commande du couple fourni par la machine électrique (E1),
**caractérisé en ce qu'**
on compare les vitesses de rotation respectives (n_{E2 soll}, n_{VM soll}) de la seconde machine électrique (E2) et du moteur à combustion interne (VM) avec des vitesses de rotation réelles (n_{E2 ist}, n_{VM ist}) , et
en cas d'écart de régulation (e_{E2}, e_{VM}) entre l'une des vitesses de rotation réelles (n_{E2 ist}, n_{VM ist}) et la vitesse de rotation de consigne correspondante (n_{E2 soll}, n_{VM soll}), sur le fondement de l'écart de régulation (e_{E2}, e_{VM}) on calcule un ou plusieurs couples supplémentaires (M_{E2 zus}, M_{VM zus}), qui sont pris en compte en plus des couples calculés (M_{E2 soll}, M_{VM soll}) par la commande (10) pour la seconde machine électrique (E2) et le moteur à combustion interne (VM).

9. Procédé selon la revendication 8,
**caractérisé en ce que**
les vitesses de rotation de consigne (n_{VM soll}, n_{E1 soll}, n_{E2 soll}) sont calculées en fonction de la position de la pédale d'accélérateur, de la puissance électrique demandée par le réseau embarqué du véhicule et les vitesses de rotation réelles des roues du véhicule ou d'une vitesse de rotation réelle (n_{AW ist}) d'un arbre de sortie (AW) de la transmission (P1, P2, 4).

10. Procédé selon la revendication 8 ou 9,
**caractérisé en ce que**
les couples de consigne (M_{VM soll}, M_{E1 soll}, M_{E2 soll}) comportent des composantes de compensation de l'inertie pour le mode de fonctionnement dynamique.
